Europäisches Patentamt

European Patent Office

Office européen des brevets

(11) Veröffentlichungsnummer: **0 365 713**

**A1**

# (12) EUROPÄISCHE PATENTANMELDUNG

(21) Anmeldenummer: 88118027.7

(22) Anmeldetag: 28.10.88

(51) Int. Cl.5: **F16H 3/54**

(43) Veröffentlichungstag der Anmeldung:
**02.05.90 Patentblatt 90/18**

(84) Benannte Vertragsstaaten:
**AT BE CH DE FR GB IT LI LU NL SE**

(71) Anmelder: **Sennebogen, Erich**
**Hebbelstrasse 30**
**D-8440 Straubing(DE)**

(72) Erfinder: **Sennebogen, Erich**
**Hebbelstrasse 30**
**D-8440 Straubing(DE)**

(74) Vertreter: **Kuhnen, Wacker & Partner**
**Schneggstrasse 3-5 Postfach 1553**
**D-8050 Freising(DE)**

(54) Getriebeeinrichtung.

(57) Eine Getriebeeinrichtung mit einem Gehäuse (2), mit einem Planetengetriebe, dessen Hohlrad (18) drehbar gelagert ist, mit einer ersten schaltbaren Kupplung (24) zur Arretierung des Hohlrades (18) in Bezug auf das Gehäuse (2) und mit einer zweiten Kupplung (26) zur Erzielung einer 1:1-Übersetzung zwischen dem Planetenradträger (22) und dem Sonnenrad (14) bei gelöster erster Kupplung (24) zeichnet sich dadurch aus, daß die zweite Kupplung (26) innerhalb des Hohlrades (18) angeordnet ist. Hierdurch wird der Bauaufwand verringert und insbesondere wird eine kompakte Bauweise der Getriebeeinrichtung erreicht.

Fig. 1

EP 0 365 713 A1

## Getriebeeinrichtung

Die Erfindung betrifft eine Getriebeeinrichtung nach dem Oberbegriff des Anspruches 1 bzw. 7.

Aus der DE-OS 36 19 368 ist eine gattungsgemäße Getriebeeinrichtung bekannt. Bei dieser Getriebeeinrichtung ist die zur Erzielung einer 1:1-Übersetzung zwischen dem Planetenradträger und dem Sonnenrad vorgesehene Kupplung als Überhol- oder Freilaufkupplung ausgebildet und zwischen dem angetriebenen Planetenradträger und der Abtriebswelle angeordnet, auf der das Sonnenrad drehfest befestigt ist. Wird das drehbar gelagerte Hohlrad im Bezug auf das Gehäuse arretiert, so wird infolge der dadurch wirksam werdenden Übersetzung des Planetengetriebes die Drehzahl des Sonnenrades und damit die Drehzahl der Abtriebswelle erhöht, so daß diese von der Überhol- oder Freilaufkupplung freikommt.

Nachteilig bei dieser bekannten Getriebeeinrichtung, die also eine 1:1-Übersetzung sowie eine der Dimensionierung des Planetengetriebes entsprechende Übersetzung zwischen Antriebs- und Abtriebswelle ermöglicht, ist jedoch, daß die Überhol- oder Freilaufkupplung erheblichen Bauaufwand erfordert und groß baut und daher außerhalb des Hohlrades angeordnet werden muß, so daß die radiale und axiale Baulänge des Planetengetriebes in nachteiliger Weise erheblich vergrößert wird.

Aufgabe der Erfindung ist es daher, eine Getriebeeinrichtung der im Oberbegriff des Anspruches 1 bzw. 9 angegebenen Gattung zu schaffen, bei der trotz Beibehaltung der Vorteile der Zweistufigkeit des Getriebes die Baugröße und der Bauaufwand für das Planetengetriebe vermindert werden.

Die Lösung dieser Aufgabe erfolgt durch die im Anspruch 1 bzw. 7 angegebenen Merkmale.

Dadurch, daß eine zur Erzielung einer 1:1-Übersetzung zwischen dem Planetenradträger und dem Sonnenrad vorgesehene Kupplung innerhalb des Hohlrades angeordnet ist, wird die axiale Baulänge der Getriebeeinrichtung erheblich verringert. Die führt, zumal wenn kein Nachschaltgetriebe vorgesehen ist, zu einer kompakten Bauweise und damit zu einer vielseitigen Verwendbarkeit der Getriebeeinrichtung. Infolge der verminderten Baugröße verringert sich auch der Bauaufwand.

Dadurch, daß gemäß Anspruch 7 das Hohlrad in axialer Richtung verschiebbar gelagert ist und durch die axiale Verschiebung erste und zweite Kupplungseingriffe zur Arretierung des Hohlrades gegebüber dem Gehäuse bzw. zur Erzielung einer 1:1-Übersetzung zwischen dem Planetenradträger und dem Sonnenrad erzielt werden, kann bei Beibehaltung der gleichen kompakten Bauweise gemäß der Ausführungsform von Anspruch 1 eine sichere mechanische und damit weitestgehend störunempfindliche Ansteuerung der Getrieberichtung erfolgen.

Vorteilhafte Weiterbildungen der Erfindungen ergeben sich aus den jeweiligen Unteransprüchen.

Wenn gemäß Anspruch 2 die Kupplung als von Hand schaltbare Kupplung ausgebildet ist, ergibt sich der Vorteil, daß die Übersetzung des Planetengetriebes von Hand frei wählbar ist. Gemäß Anspruch 2 ist es aber auch möglich, die Kupplung als automatisch, etwa in Abhängigkeit der Drehzahlverhältnisse, schaltbare Kupplung auszubilden.

Dadurch, daß gemäß Anspruch 3 die Kupplung, die lösbar ausgebildet und als kraftschlüssige Verbindung zwischen Planetenradträger und Kuppelrad angeordnet ist, in Eingriffsstellung das Hohlrad gegenüber dem Planetenradträger arretiert und somit durch Verhinderung jeglicher Relativbewegung zwischen den Planetenrädern und dem Hohlrad auch zu einer Arretierung zwischen Planetenradträger und Sonnenrad führt ist eine unmittelbare Kupplung zwischen Sonnenradwelle und Planetenradträger zur Erzielung der 1:1-Übersetzung nicht erforderlich.

Ist nach Anspruch 4 die Kupplung zwischen einem Bereich der inneren Umfangsfläche des Hohlrades und einem Bereich der äußeren Umfangsfläche des Planetenradträgers und somit als radial wirkende Kupplung ausgebildet, so ergibt sich in vorteilhafter Weise ein konstruktiv einfacher und platzsparender Aufbau der Kupplung.

Ist nach Anspruch 5 die Kupplung in Eingriffsstellung durch ein Druckmittel, beispielsweise eine Hydraulikflüssigkeit belastet, so führt dies in vorteilhafter Weise zu einem zuverlässigen Betrieb der Kupplung und macht eine mechanische Betätigungseinrichtung entbehrlich. Der hohe zur Verfügung stehende Hydraulikdruck ermöglicht hohe Haltekräfte auch bei einer Ausbildung der Kupplung beispielsweise als Reibungskupplung.

Sind gemäß Anspruch 6 in der äußeren Umfangsfläche des Planetenradträgers Hydraulikkammern ausgebildet, in denen Gleitelemente radial beweglich geführt sind, so lassen sich die bei Druckmittelbetätigung der Kupplung auftretenden Dichtungsprobleme sicher beherrschen.

Erfolgt gemäß Anspruch 8 die Verschiebung des Hohlrades von Anspruch 7 über eine druckmittelbetätigte Schaltgabel oder ein mechanisches Gestänge, so kann wie im Fall der Weiterbildung der Erfindung gemäß Anspruch 5 auf gegebenenfalls zur Verfügung stehende Hydraulikflüssigkeit als Betätigungsmittel zurückgegriffen werden, oder die Verschiebung erfolgt von einer Bedienungsperson von Hand, was hinsichtlich der Herstellungskosten und auch der einfacheren konstruktiven Ausgestaltung vorteilhaft ist.

Wird gemäß Anspruch 9 in einer Leerlaufstellung des Hohlrades eine Antriebseinrichtung für die Drehmomenteinleitung in die Getriebevorrichtung zwangsläufig außer Betrieb gesetzt, kann zwischen dem ersten Kupplungseingriff und dem zweiten Kupplungseingriff und wieder zurück ohne Synchronisationsprobleme geschaltet werden und weiterhin können in der Leerlaufstellung des Hohlrades eventuelle Vorgelege- oder Nachgelegegetriebe betätigt werden.

Erfolgt gemäß Anspruch 10 die Außerbetriebsetzung der Antriebseinrichtung durch ein Schaltventil, welches zwangsläufig in Abhängigkeit von der Schaltbewegung des Hohlrades angesteuert wird, ist eine exakte Synchronisation zwischen Schaltbewegung des Hohlrades und Außerbetriebsetzung der Antriebseinrichtung und somit ein zuverlässiges und sicheres Schalten der Getriebeeinrichtung gewährleistet.

Weitere Einzelheiten, Merkmale und Vorteile der vorliegenden Erfindung ergeben sich aus der nachfolgenden Beschreibung zweier Ausführungsformen anhand der Zeichnung.

Es zeigt:

Fig. 1 eine erste Ausführungsform einer erfindungsgemäßen Getriebeeinrichtung in einer schematisch teilweise vereinfachten Schnittdarstellung;

Fig. 2 eine weitere Ausführungsform einer erfindungsgemäßen Getriebeeinrichtung in Schnittdarstellung; und

Fig. 3 eine Abwandlung der Ausführungsform von Fig. 2.

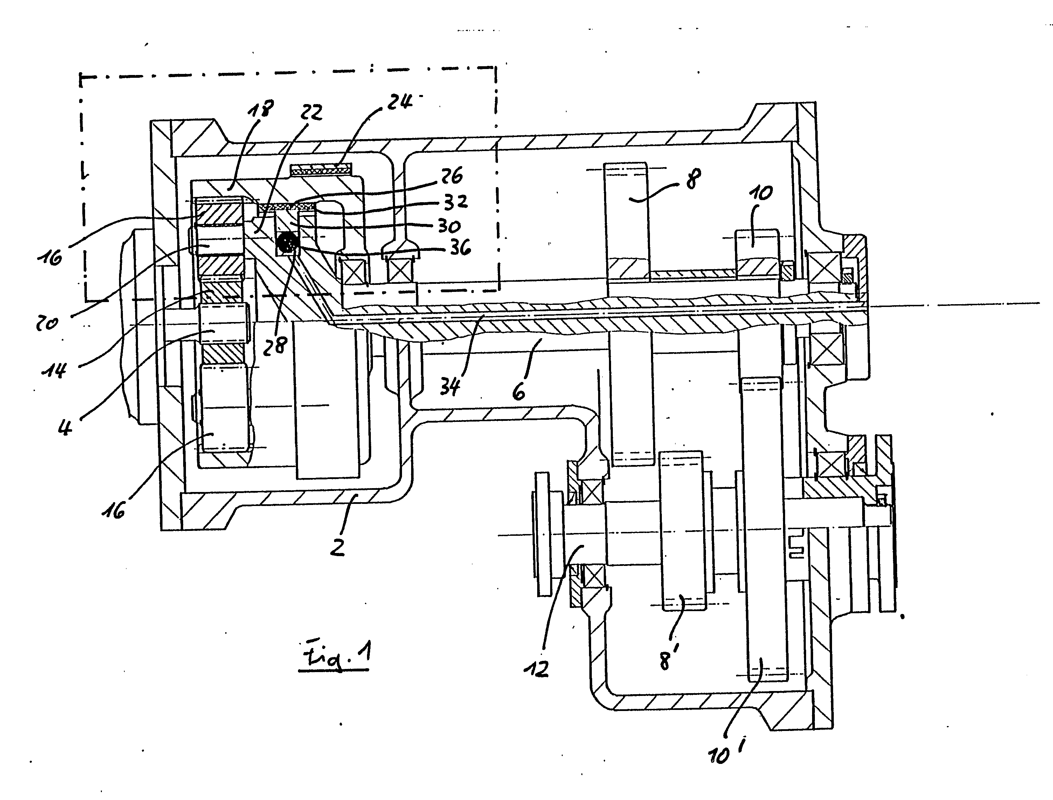

Gemäß Fig. 1 ist in ein Gehäuse 2 einer erfindungsgemäßen Getriebeeinrichtung ein Zapfen 4 einer nicht näher dargestellten Antriebswelle eingeführt, welche mit einer Antriebseinrichtung für die Drehmomenteinleitung in die Getriebevorrichtung verbunden ist. Mittels Wälzlagern ist in dem Gehäuse 2 eine Planetenradträgerwelle 6 drehbar gelagert, die über Stirnräder 8, 8′ bzw. 10, 10′ mit einer Abtriebswelle 12 in Verbindung steht. Auf dem Zapfen 4 ist ein Sonnenrad 14 eines Planetengetriebes drehfest angeordnet, das mit Planetenrädern 16 kämmt, die ihrerseits mit einem auf der Planetenradträgerwelle 6 drehbar gelagerten Hohlrad 18 in Eingriff stehen. Zur Lagerung der Planetenräder 16 dienende Drehzapfen 20 sind fest mit einem Planetenradträger 22 verbunden. Eine radial auf die äußere Umfangsfläche des Hohlrades 18 wirkende erste Kupplung 24 ermöglicht in Eingriffsstellung eine Arretierung des Hohlrades 18 in Bezug auf das Gehäuse 2. Zwischen der äußeren Umfangsfläche des Planetenradträgers 22 und der inneren Umfangsfläche des Hohlrades 18 ist eine zweite Kupplung 26 vorgesehen, welche in Druckkammern 28 radial bewegliche Gleitelemente 30 aufweist, an deren äußerer Umfangsfläche Reibbeläge 32 angeordnet sind. Das zum Betätigen der zweiten Kupplung 26 erforderliche Druckmittel, vorzugsweise eine Hydraulikflüssigkeit, wird über einen in dem Planetenradträger 22 und in der Achse der Planetenradträgerwelle 6 verlaufenden Druckmittelkanal 34 zugeführt. Für die erforderliche Abdichtung ist ein in der Druckkammer 28 angeordnetes Dichtungselement 36 vorgesehen.

Durch Zusammenwirken der ersten Kupplung 24 und der zweiten Kupplung 26 sind vier verschiedene Betriebszustände der Getriebeeinrichtung möglich. Sind sowohl die erste Kupplung 24 wie die zweite Kupplung 26 in ihren ersten und zweiten schaltbaren Kupplungseingriffen, so führt dies zu einer Blockade der Getriebeeinrichtung, da jegliche Relativbewegung zwischen dem Sonnenrad 14, den Planetenrädern 16, dem Hohlrad 18 und dem Gehäuse 2 verhindert ist. Sind hingegen die erste Kupplung 24 und die zweite Kupplung 26 in Lösestellung, so befindet sich die Getriebeeinrichtung im Leerlauf, d. h. es findet keine Drehmomentübertragung von der Antriebs- auf die Planetenradträgerwelle 16 statt. In diesem Betriebszustand läßt sich auch das Nachschaltgetriebe mit den Zahnrädern 8, 8′ bzw. 10, 10′ schalten. Ist die erste Kupplung 24 in ihrem Kupplungseingriff und die zweite Kupplung 26 in Lösestellung so findet mit dem dann in Bezug auf das Gehäuse 2 arretierten Hohlrad 18 in bekannter Weise durch das Planetengetriebe eine Untersetzung der Drehzahl von der Antriebswelle auf die Planetenradträgerwelle statt. Ist umgekehrt die erste Kupplung 24 in Lösestellung und die zweite Kupplung 26 im Kupplungeingriff, so wird eine Relativbewegung der Planetenräder 16 gegenüber dem Hohlrad 18 verhindert und somit eine teils formschlüssige, teils kraftschlüssige Verbindung zwischen dem auf der Antriebswelle drehfesten Sonnenrad 14 und der Planetenradträgerwelle 6 hergestellt, so daß sich ein Übersetzungsverhältnis von 1:1 ergibt.

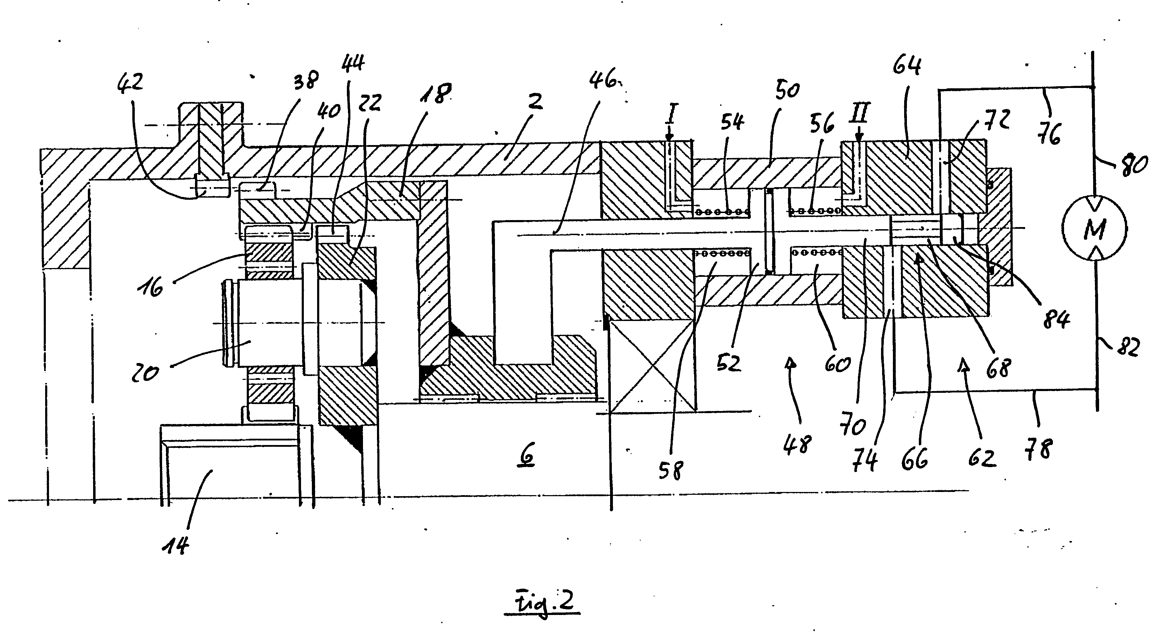

In der Ausführungsform gemäß Fig. 2 sind gleiche Teile wie in der Ausführungsform gemäß Fig. 1 mit gleichen Bezugszeichen versehen und eine nochmalige detaillierte Beschreibung erfolgt nicht.

Weiterhin zeigt Fig. 2 nur einen Ausschnitt aus der zweiten Ausführungsform gemäß der vorliegenden Erfindung entsprechend dem in Fig. 1 mit strichpunktierten Linien gekennzeichneten Bereich.

Analog zu der Ausführungsform gemäß Fig. 1 kämmt ein in Fig. 2 nur andeutungsweise dargestelltes Sonnenrad 14 mit Planetenrädern 16, von denen in Fig. 2 nur eines dargestellt ist. Das Planetenrad 16 gemäß Fig. 2 ist von einem Drehzapfen 20 gelagert, der wiederum in einem Planetenradträger 22 geführt ist. Der Planetenradträger 22 ist mit der in Fig. 2 ebenfalls nur andeutungsweise dargestellten Planetenradträgerwelle 6 verbunden.

Insoweit entspricht der Aufbau der Ausführungsform gemäß Fig. 2 dem Aufbau der Ausführungsform gemäß Fig. 1.

Das Planetenrad 16 und der Planetenradträger 22 werden von einem Hohlrad 18 übergriffen, wobei das Hohlrad 18 eine Außenverzahnung 38 und eine Innenverzahnung 40 aufweist. Die Außenverzahnung 38 an dem Hohlrad 18 ist mit einer entsprechenden Gegenverzahnung 42 an der inneren Umfangswand des Gehäuses 2 in Eingriff bringbar und die Innenverzahnung 40 kämmt permanent mit der Verzahnung der Planetenräder 16 und ist weiterhin mit einer Außenverzahnung 44 an dem Planetenradträger 22 in Eingriff bringbar. Die verschiedene Eingriffszustände der Außenverzahnung 38 bzw. der Innenverzahnung 40 des Hohlrades 18 werden dadurch erreicht, daß das Hohlrad 18 axial verschiebbar ist. Hierzu ist das Hohlrad 18 auf der Planetenradträgerwelle 6 entsprechend gelagert und die axiale Verschiebung des Hohlrades 18 erfolgt über eine Schaltgabel 46, welche von einem Ansteuermechanismus 48 betrieben wird. Der Ansteuermechanismus 48 weist im wesentlichen einen Schaltzylinder 50 mit einem darin gleitbeweglich geführten Kolben 52 auf, wobei der Kolben 52 in dem Schaltzylinder 50 durch zwei Druckfedern 54 und 56 derart mittenzentriert ist, daß das Hohlrad 18 über die Schaltgabel 46 derart positioniert ist, daß kein Eingriff zwischen der Außenverzahnung 38 und der Gegenverzahnung 42 bzw. der Innenverzahnung 40 und der Außenverzahnung 44 erfolgt. Mit anderen Worten, in der in Fig. 2 dargestellten Neutrallage des Kolbens 52 besteht nur ein Eingriff zwischen der Innenverzahnung 40 und der Verzahnung der Planetenräder 16. Diese Stellung des Hohlrades 18 ist gleichzeitig die Leerlaufstellung der gesamten Getriebeeinrichtung gemäß Fig. 2.

Die Bewegung des Kolbens 52 in dem Schaltzylinder 50 erfolgt mittels zweier Kammern 58 und 60, welche mit Druckmittelein- und -auslässen I und II in Verbindung stehen, so daß beispielsweise eine Beaufschlagung der Kammer 58 durch den Druckmitteleinlaß I eine Verstellung des Kolbens 52 und damit der Schaltgabel 46 und des Hohlrades 18 in Fig. 2 nach rechts bewirkt. Auf ähnliche Weise bewirkt eine Druckbeaufschlagung der Kammer 60 eine Bewegung des Hohlrades 18 in Fig. 2 nach links.

Gegenüber der Ausführungsform gemäß Fig. 1 besteht bei der Ausführungsform gemäß Fig. 2 der wesentliche Unterschied, daß kein allmählich einschleifender Kupplungseingriff zwischen dem Gehäuse 2 und dem Hohlrad 18 bzw. dem Hohlrad 18 und dem Planetenradträger 22 erfolgt, sondern ein direkter unmittelbarer Zahnradeingriff zwischen der Gegenverzahnung 42 und der Außenverzahnung 38 bzw. der Innenverzahnung 40 und der Außenverzahnung 44. Aus diesem Grund ist es äußerst wünschenswert und besonders vorteilhaft, eine Synchronisation der Getriebeeinrichtung dahingehend zu erzielen, daß der jeweilige Eingriff zwischen den Verzahnungen 42 und 38 bzw. 40 und 44 bei stillstehendem Hohlrad 18 erfolgt.

Hierzu ist gemäß Fig. 2 eine Schaltvorrichtung 62 vorgesehen, welche im wesentlichen ein Schaltgehäuse 64 und ein darin angeordnetes Schaltventil 66 aufweist. Das Schaltventil 66 besteht aus einer ringförmig umlaufenden Nut 68, welche an einer Verlängerung 70 des Kolbens 52 ausgebildet ist. In der Leerlaufstellung gemäß Fig. 2, in der nur ein Zahnradeingriff zwischen der Innenverzahnung 40 und den Planetenrädern 16 vorliegt, steht die Nut 68 mit zwei Anschlüssen 72 und 74 in Verbindung, welche mit Leitungen 76 und 78 in Verbindung stehen, welche wiederum mit Motorantriebsleitungen 80 und 82 in Verbindung stehen, die das zum Betrieb eines Hydraulikmotors M nötige Druckfluid fördern.

Die Arbeitsweise dieser Schaltvorrichtung 62 ist wie folgt:

In der in Fig. 2 dargestellten Leerlaufstellung der Getriebeeinrichtung befindet sich die Nut 68 in der dar gestellten Lage, so daß die beiden Anschlüsse 72 und 74 über die Nut 68 des Schaltventils 66 miteinander in Verbindung stehen und somit die Motorantriebsleitungen 80 und 82 über die Leitungen 76 und 78 quasi kurzgeschlossen sind, so daß dem Hydraulikmotor M kein Druckmittel zugeführt wird und der Motor somit steht. Da der Motor M zur Einleitung des Drehmomentes in die Getriebeeinrichtung dient, stehen auch das Sonnenrad 14 und damit die Planetenräder 16 und das Hohlrad 18 still. Wird nun beispielsweise die Kammer 60 über den Druckmitteleinlaß II mit einem unter Druck stehenden Fluid beaufschlagt, wird der Kolben 52 in Fig. 2 nach links bewegt, so daß die Außenverzahnung 38 mit der entsprechenden Gegenverzahnung 42 an dem Gehäuse 2 - bei noch stillstehendem Hohlrad 18 - in Eingriff gelangt. Erst nach dem erfolgten Eingriff zwischen der Außenverzahnung 38 und der Gegenverzahnung 42 beginnt der Hydraulikmotor M ein Drehmoment über das Sonnenrad 14 in die Getriebeeinrichtung einzuleiten, da im Zuge der in Fig. 2 nach links gerichteten Bewegung des Kolbens 52 auch die Verlängerung 70 nach links bewegt wird, so daß der Anschluß 72 von einem Endstück 84 an der Verlängerung 70 verschlossen wird, so daß die Motorantriebsleitungen 80 und 82 nicht mehr über das Haltventil 66 kurzgeschlossen sind und der Hydraulikmotor M über die Motorantriebsleitungen 80 und 82 mit Druckmittel beaufschlagt wird.

Wenn andererseits die Kammer 58 über den Druckmitteleinlaß I mit einem unter Druck stehenden Fluid beaufschlagt wird, erfolgt eine Bewegung des Kolbens 52 in Fig. 2 nach rechts, so daß das noch stillstehende Hohlrad 18 über die Schaltgabel 46 ebenfalls nach rechts bewegt wird und hierbei die Innenverzahnung 40 mit der Außenverzahnung 44 an dem Planetenradträger 22 in Eingriff gelangt. Im Zuge der nach rechts gerichteten Bewegung des Kolbens 52 wird auch die Verlängerung 70 des Kolbens 52 nach rechts bewegt, so daß der Anschluß 74 von der Verlängerung 70 verschlossen wird und somit der Hydraulikmotor M über die Motorantriebsleitungen 80 und 82 mit einem Druckmittel beaufschlagt wird und ein Drehmoment in die Getriebeeinrichtung einleiten kann.

Mit anderen Worten, im Zuge einer Bewegung des Hohlrades 18 derart, daß ein Getriebeeingriff zwischen der Gegenverzahnung 42 und der Außenverzahnung 38 gelöst wird und ein Eingriff zwischen der Innenverzahnung 40 und der Außenverzahnung 44 aufgebaut wird, durchläuft das Hohlrad 18 und damit auch die Nut 68 die in Fig. 2 dargestellte Leerlaufstellung, in der der Hydraulikmotor M über den Anschluß 72, die Nut 68 und den Anschluß 74 kurzgeschlossen ist, so daß die Getriebeeinrichtung nicht mit einem Drehmoment beaufschlagt wird, das Sonnenrad 14 stillsteht und damit der Eingriff zwischen der Innenverzahnung 40 und der Außenverzahnung 44 bei stehendem Getriebe und somit belastungsfrei erfolgt.

Ein Eingriff zwischen der Gegenverzahnung 42 und der Außenverzahnung 38 enspricht einer gelösten Kupplung 26 und einer in Eingriff stehenden Kupplung 24 in Fig. 1, d. h. das Hohlrad 18 ist relativ zu dem Gehäuse 2 arretiert und es findet in bekannter Weise eine Untersetzung der Drehzahl von der Antriebswelle auf die Planetenradträgerwelle 6 statt. In der in Fig. 2 dargestellten Neutrallage der Getriebeeinrichtung besteht nur ein Eingriff zwischen den Planetenrädern 16 und der Innenverzahnung 40 des Hohlrades 18, was der Stellung in Fig. 1 entspricht, in der die beiden Kupplungen 24 und 26 gelöst sind und es findet keine Drehmomentübertragung von der Antriebswelle auf die Planetenradträgerwelle 6 statt.

Befindet sich die Innenverzahnung 40 in Eingriff mit der Außenverzahnung 44 an dem Planetenradträger 22, entspricht dies einer gelösten Kupplung 24 und einer angezogenen Kupplung 26 in Fig. 1, d. h., eine Relativbewegung der Planetenräder 16 gegenüber dem Hohlrad 18 ist verhindert und es erfolgt eine teils formschlüssige teils kraftschlüssige Verbindung zwischen dem auf der Antriebswelle drehfesten Sonnenrad 14 und der Planetenradträgerwelle 6, so daß ein Übersetzungsverhältnis von 1:1 besteht.

Durch die zwangsläufige Entkopplung des Hydraulikmotors M im Zuge der Schaltbewegung der Getriebeeinrichtung wird in jedem Fall eine beabsichtigte oder unbeabsichtigte Beschädigung der einzelnen Getriebekomponenten der Getriebeeinrichtung verhindert.

Besonders vorteilhaft kann es sein, wenn die Nut 68 derart dimensioniert ist, daß im Zuge der Bewegung des Kolbens 52 nach links oder rechts und damit im Zuge des Eingriffes zwischen der Gegenverzahnung 42 und der Außenverzahnung 38 oder der Innenverzahnung 40 und der Außenverzahnung 44 der Motor M bereits mit geringen Mengen von Druckmitteln derart beaufschlagt wird, daß bereits eine geringfügige Drehung des Sonnenrades 14 und damit eine Unterstützung des Zahnradeingriffes erfolgt.

Die Verschiebung der Schaltgabel 46 kann anstelle des Kolbens 52 auch durch ein mechanisches Gestänge erfolgen, mittels dem eine Bedienungsperson die gewünschten Schaltvorgänge durchführt. Die Funktion des Schaltventiles bleibt hiervon unbeeinflußt.

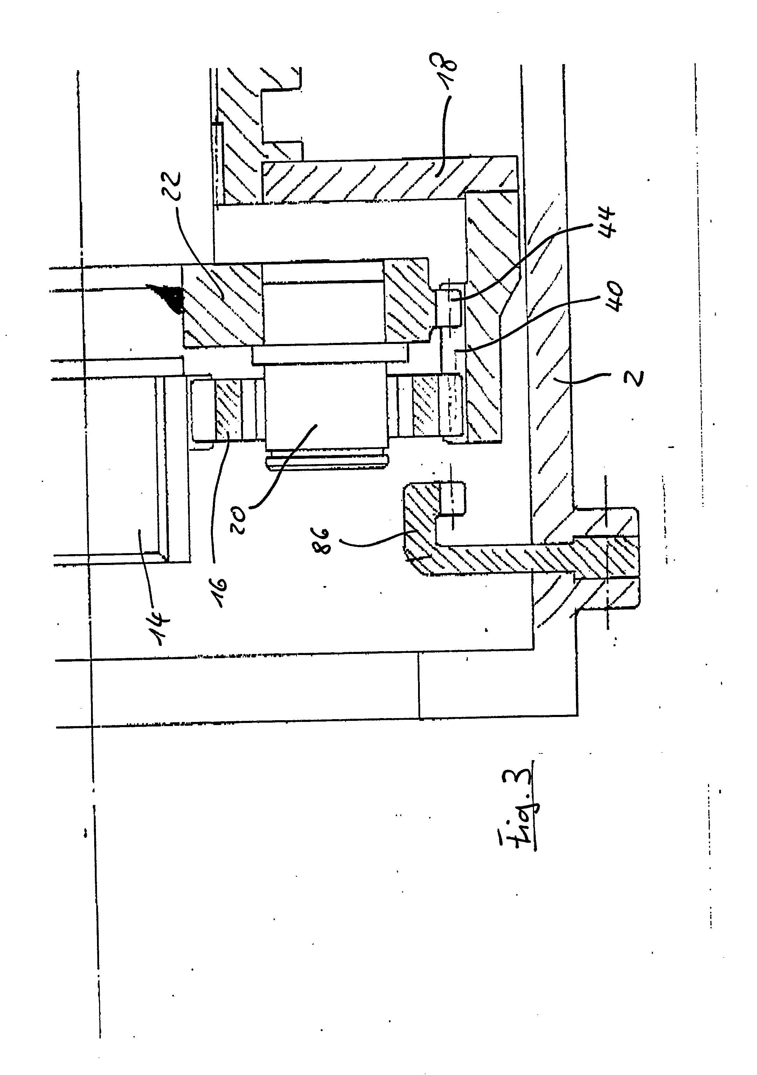

Fig. 3 zeigt eine Abwandlung der Ausführungsform gemäß Fig. 2. Bei dieser Abwandlung ist anstelle der Gegenverzahnung 42 an der Innenwand des Gehäuses 2 ein Zahnprofil 86 angeordnet, welches mit der Innenverzahnung 40 in Eingriff bringbar ist und dann das Hohlrad 18 gegenüber dem Gehäuse 2 arretiert. Hierzu ist die Innenverzahnung 40, wie in Fig. 3 dargestellt, gegenüber der Ausführungsform von Fig. 2 länger ausgebildet, so daß bei einer Verschiebung des Hohlrades 18 in Fig. 3 nach links ein Lösen des Eingriffes zwischen der Innenverzahnung 40 und der Außenverzahnung 44 und ein Eingreifen der Innenverzahnung 40 mit dem Zahnprofil 86 bewirkt wird. Die übrigen Komponenten der Abwandlung gemäß Fig. 3 entsprechen denen von Fig. 2; einander entsprechende Teile sind daher mit gleichen Bezugszeichen versehen.

## Ansprüche

1. Getriebeeinrichtung mit einem Gehäuse (2), mit einem Planetengetriebe, dessen Hohlrad (18) drehbar gelagert ist, mit einem ersten schaltbaren Kupplungseingriff zur Arretierung des Hohlrades (18) gegenüber dem Gehäuse (2) und mit einem zweiten schaltbaren Kupplungseingriff zur Erzielung einer 1:1-Übersetzung zwischen einem Planetenradträger (22) und einem Sonnenrad (14) bei gelöstem ersten Kupplungseingriff, **dadurch gekennzeichnet,** daß der zweite Kupplungseingriff durch eine Kupplung (26) innerhalb des Hohlrades (18) erfolgt.

2. Getriebeeinrichtung nach Anspruch 1, dadurch gekennzeichnet, daß die Kupplung (26) von einer Bedienungsperson gesteuert schaltbar oder automatisch schaltbar ist.

3. Getriebeeinrichtung nach einem der vorhergehenden Ansprüche, dadurch gekennzeichnet, daß die Kupplung (26) lösbar ausgebildet ist und in Eingriffstellung das Hohlrad (18) gegenüber dem Planetenradträger (22) kraftschlüssig arretiert.

4. Getriebeeinrichtung nach einem der vorhergehenden Ansprüche, dadurch gekennzeichnet, daß die Kupplung (26) zwischen einem Bereich der inneren Umfangsfläche des Hohlrades (18) und einem Bereich der äußeren Umfangsfläche des Planetenradträgers (22) angeordnet ist.

5. Getriebeeinrichtung nach einem der vorhergehenden Ansprüche, dadurch gekennzeichnet, daß die Kupplung (26) in der Eingriffstellung druckmittelbelastet ist.

6. Getriebeeinrichtung nach Anspruch 5, dadurch gekennzeichnet, daß in der äußeren Umfangsfläche des Planetenradeträgers (22) mindestens eine Druckkammer (28) ausgebildet ist, in der mindestens ein Gleitelement (30) radial beweglich abgedichtet und in Umfangsrichtung ortsfest gehalten geführt ist, und mit einem Druckmittelkanal (34) verbunden ist, der im Bereich der Planetenradträgerwelle (6) in deren Achse verläuft.

7. Getriebeeinrichtung mit einem Gehäuse (2), mit einem Planetengetriebe, dessen Hohlrad (18) drehbar gelagert ist, mit einem ersten schaltbaren Kupplungseingriff zur Arretierung des Hohlrades (18) gegenüber dem Gehäuse (2), mit einem zweiten schaltbaren Kupplungseingriff zur Erzielung einer 1:1-Übersetzung zwischen einem Planetenradträger (22) und einem Sonnenrad (14) bei gelöstem ersten Kupplungsein griff, **dadurch gekennzeichnet,** daß das Hohlrad (18) in axialer Richtung derart verschiebbar gelagert ist, daß es zwischen einer Stellung für den ersten Kupplungseingriff zur Arretierung gegenüber dem Gehäuse und einer Stellung für den zweiten Kupplungseingriff für die 1:1-Übersetzung bewegbar ist.

8. Getriebeeinrichtung nach Anspruch 7, dadurch gekennzeichnet, daß die Verschiebung des Hohlrades (18) über eine druckmittelbetätigte Schaltgabel (46) oder ein mechanisches Gestänge erfolgt.

9. Getriebeeinrichtung nach Anspruch 8 oder 9, dadurch gekennzeichnet, daß in einer Leerlaufstellung des Hohlrades (18) eine Antriebseinrichtung (M) für die Drehmomenteinleitung in die Getriebevorrichtung zwangsläufig außer Betrieb setzbar ist, wenn das Hohlrad (18) aus seiner Leerlaufstellung in einen seiner Kupplungseingriffe bewegt wird und im Zuge des Einrückvorgangs zwangsläufig in Bewegung setzbar ist.

10. Getriebeeinrichtung nach Anspruch 9, dadurch gekennzeichnet, daß die Außerbetriebsetzung der Antriebseinrichtung (M) durch ein Schaltventil (66) erfolgt, welches von dem Hohlrad (18) im Zuge dessen axialer Bewegung zwangsläufig angesteuert wird.

Fig. 1

Fig.2

Fig. 3

EP 0 365 713 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 132 023 (EATON CO.) <br> * Anspruch 1; Figuren 4,5 * <br> --- | 1-3,7,9 | F 16 H 3/54 |
| X | DE-C- 920 532 (E. LAMMERZ) <br> * Anspruch 1; Figur 1 * <br> --- | 1-5 | |
| A | FR-A-2 535 809 (SOCIETE D'ETUDES ET DE DEVELOPPEMENT DE MATERIELS SPECIAUX) <br> * Seite 4, Zeilen 19-34 * <br> --- | 6 | |
| E | DE-A-3 719 672 (SENNEBOGEN) <br> * Insgesamt * <br> ----- | 1-10 | |

**RECHERCHIERTE SACHGEBIETE (Int. Cl.5)**

F 16 H

Der vorliegende Recherchenbericht wurde für alle Patentansprüche erstellt

| Recherchenort | Abschlußdatum der Recherche | Prüfer |
|---|---|---|
| DEN HAAG | 05-06-1989 | BEERNAERT J.E. |